# EUROPEAN PATENT APPLICATION

(11) **EP 4 454 936 A1**
(43) Date of publication of application: **30.10.2024**
(21) Application number: 22910237.1
(22) Date of filing: 26.12.2022
(51) Int. Cl.: B60L 53/80, B60K 1/04, B60S 5/06

(54) **ELECTRIC VEHICLE**

(30) Priority: 26.12.2021 CN 202111606763; 26.12.2021 CN 202111606781; 31.03.2022 CN 202210344993
(71) Applicant: Aulton New Energy Automobile Technology Co., Ltd., Guangzhou, Guangdong 510700 (CN); Shanghai Dianba New Energy Technology Co., Ltd., Shanghai 201308 (CN)
(72) Inventor: ZHANG, Jianping, Shanghai 201308 (CN); CHU, Jiawei, Shanghai 201308 (CN); ZHANG, Xiaochun, Shanghai 201308 (CN); ZHU, Ming, Shanghai 201308 (CN)
(74) Representative: CAPRI
(86) International application number: PCT/CN2022/142052
(87) International publication number: WO 2023/116931

(57) **Abstract**

An electric vehicle (1), comprising a battery pack (10) and a locking mechanism (40), wherein the locking mechanism (40) is mounted on the electric vehicle (1) and is configured to lock the battery pack (10); and an unlocking mechanism (20) is provided in the battery pack (10), and the unlocking mechanism (20) is configured to unlock the locking mechanism (40) under an external driving force. The unlocking mechanism is arranged in the battery pack and is configured to unlock the locking mechanism under the external driving force. Compared with a method whereby a locking mechanism is directly unlocked by means of an external driving mechanism, an unlocking distance stroke can be shortened, so that not only can the unlocking efficiency be increased, but the alignment precision of the unlocking mechanism on the locking mechanism during unlocking can also be improved, thereby enhancing the unlocking reliability. Moreover, the unlocking mechanism is arranged on the battery pack, so that the occupied space of an external driving mechanism can be reduced, and the overall height of the external driving mechanism is shortened, thereby simplifying the structural complexity of the external driving mechanism.

## Description

The present application claims the priority of Chinese patent application CN2021116067637 filed on December 26, 2021, Chinese patent application CN2021116067815 filed on December 26, 2021 and Chinese patent application 2022103449939 filed on March 31, 2022, the contents of which are incorporated herein by reference in their entireties.

### TECHNICAL FIELD

The present disclosure relates to an electric vehicle.

### BACKGROUND

After the battery pack of an electric vehicle is exhausted, it can be quickly recharged by swapping the battery pack at a battery swapping station, it is necessary to remove the battery pack from the vehicle body and swap a fully charged battery pack, therefore, the locking mechanism between the battery pack and the vehicle body is very important, which not only ensures the reliable locking between the battery pack and the vehicle body, but also enables the battery pack and the vehicle body to be quickly separated. Normally, the battery pack is connected to the electric vehicle by means of a locking device. The locking device usually comprises a locking base and a locking shaft arranged correspondingly, the locking base is usually arranged on the electric vehicle, one end of the locking shaft is arranged on the battery pack, and the other end of the locking shaft is inserted into the locking base and locked through a locking tongue to achieve the fixing of the battery pack.

In the prior art, the unlocking position of the locking device is close to the bottom of the battery pack, and when the locking device is unlocked, the locking link is usually lifted up through the unlocking ejector rod of the external device, so that the locking tongue is driven to swing upwardly to disengage from the locked groove, so as to enable the locking shaft on the battery pack to move inside the locked groove and move out of the locked groove, so as to realize the unlocking and the removing and swapping the battery pack. For electric vehicles in which the unlocking position of the locking device is close to the top of the battery pack, due to the thicker thickness of the battery pack itself, the unlocking rod needs to possess a higher telescopic length to pass through the battery pack to reach the unlocking position, but the existing external device can not be provided with an unlocking rod with the above telescopic length, even if the unlocking rod can have a sufficient telescopic length, the moving path of the unlocking ejector rod is long, the unlocking time is prolonged, the alignment accuracy is poor, the unlocking reliability is affected, and the occupied space of the unlocking rod is large, which may make the overall height of the external device higher.

### CONTENT OF THE PRESENT INVENTION

The technical problem to be solved by the present invention is to provide an electric vehicle in order to overcome the defect that the unlocking ejector rod of the external device of the prior art is unable to satisfy unlocking for the unlocking position of the locking device close to the top the battery pack.

The present invention solves the above technical problem through the following technical solutions:
An electric vehicle, comprising a battery pack and a locking mechanism, wherein the locking mechanism is mounted on the electric vehicle and is configured to lock the battery pack; wherein an unlocking mechanism is provided in the battery pack, and the unlocking mechanism is configured to unlock the locking mechanism under an external driving force.

In this solution, the unlocking mechanism is arranged in the battery pack and is configured to unlock the locking mechanism under the external driving force, compared with a method whereby a locking mechanism is directly unlocked by means of an external driving mechanism, an unlocking distance stroke can be shortened, so that not only can the unlocking efficiency be increased, but the alignment precision of the unlocking mechanism on the locking mechanism during unlocking can also be improved, thereby enhancing the unlocking reliability. Moreover, the unlocking mechanism is arranged on the battery pack, so that the occupied space of an external driving mechanism can be reduced, and the overall height of the external driving mechanism is shortened, thereby simplifying the structural complexity of the external driving mechanism.

Preferably, wherein the battery pack is provided with a locking member, and the locking member and the locking mechanism cooperate to lock and unlock the battery pack.

In this solution, by providing the locking member on the battery pack, it is able to connect with the locking mechanism to realize locking of the battery pack; the unlocking mechanism can apply an unlocking action force on the locking mechanism, thereby unlocking the battery pack, so that the battery pack is able to be locked on the electric vehicle or to be unlocked and removed from the electric vehicle.

Preferably, wherein a top end of the unlocking mechanism can extend from an outlet of the battery pack and abut against the locking mechanism for unlocking.

In this solution, the unlocking mechanism extends from the outlet of the battery pack and acts on the locking mechanism, this unlocking movement method is relatively simple, the alignment accuracy is high, and the unlocking stroke is short, which can improve unlocking reliability.

Preferably, wherein the locking mechanism comprises a plurality of locking bases, at least part of the locking bases are provided with locking tongues, and the locking tongue can be rotationally mounted in the locking base, the top end of the unlocking mechanism can extend from the outlet of the battery pack to unlock the lock tongue.

In this solution, the battery pack can be locked through the locking tongue mounted in the locking base; and the locking tongue is rotatably mounted in the locking base, and by means of the unlocking mechanism, the locking tongue can be pushed to rotate, thereby unlocking the battery pack.

Preferably, wherein the locking mechanism further comprises a locking link, the locking link is movably connected with the locking base through the locking tongue, and the top end of the unlocking mechanism can extend from the outlet of the battery pack and abut against the locking link to drive the locking tongue to unlock.

In this solution, the unlocking mechanism can act on the locking link, and push the locking link to move relative to the locking base, thereby driving the locking tongue to unlock, on the one hand, the range of action of the unlocking mechanism is larger, and on the other hand, the locking link can connect multiple locking tongues, thereby driving multiple locking tongues to move synchronously.

Preferably, the locking link possesses an unlocking surface on one side facing the locking base, the top end of the unlocking mechanism abuts against the unlocking face and moves on the unlocking face, the unlocking face extends along the length direction of the locking link, so that when the unlocking mechanism moves on the unlocking surface, the locking tongue can be driven to unlock and remain unlocked.

In this solution, the unlocking mechanism abuts against the unlocking surface of the locking link, so that the top end of the unlocking mechanism can act on the surface, making the unlocking process more reliable. Moreover, the unlocking surface extends along the length direction of the locking link, during the unlocking process, when the unlocking mechanism moves along the length direction of the locking link, the unlocking mechanism can move on the unlocking surface and will not get stuck at a certain part of the unlocking surface, which greatly improves the unlocking stability of the locking mechanism. At the same time, when the locking member of the battery pack moves relative to the locking base along the length direction of the locking link, the top end of the unlocking mechanism can always jack and abut against the locking link and maintain the vertical position of the locking link, so that the lock tongue remains open and avoid unlocking errors.

Preferably, the lower surface of the locking link possesses a protruding portion extending toward the locking base, and the unlocking surface is located at the bottom surface of the protruding portion.

Preferably, the unlocking surface is in the form of a horizontal plane, or the unlocking surface is a concave square, a concave arc, a concave triangle or a concave prism.

In this solution, the unlocking mechanism applies action force on the unlocking surface and moves along the length direction of the locking link on the horizontal plane without getting stuck in a certain position, the unlocking stability is high, the unlocking surface is a horizontal plane, and the fault tolerance is greater, on the condition that there is alignment deviation, or a twist angle for the unlocking device, it can always remain within the unlocking surface; meanwhile, the structure is simple and the processing is convenient. The unlocking surface is a concave square, which can restrict the unlocking device so that the unlocking device cannot be divorced from the unlocking surface during the unlocking process, the unlocking surface is a concave arc, a concave triangle or a concave prism, which can form an optimal unlocking line with the unlocking device and possess appropriate fault tolerance, so that the unlocking device can move along the length direction of the locking link in the unlocking surface, and it is easy for the unlocking device to stay in the unlocking surface.

Preferably, in an initial state, the top end of the unlocking mechanism extends from an outlet of the battery pack and is spaced vertically from the unlocking surface.

In this solution, the initial state refers to the state when the battery pack is locked with the locking mechanism and the unlocking mechanism does not conduct unlocking operation to the locking mechanism. In the initial state, the top end of the unlocking mechanism can extend from the outlet of the battery pack, thereby shortening the distance between the top end and the unlocking surface, reducing the moving distance of the unlocking mechanism, improving unlocking efficiency, and improving unlocking reliability.

Preferably, a buffer structure is further provided on the unlocking surface, and the top end of the unlocking mechanism abuts against the buffer structure.

In this solution, the buffer structure is provided on the unlocking surface, when the top end of the unlocking mechanism acts on the unlocking surface, it can be buffered by the buffer structure to avoid wear of the unlocking surface due to rigid contact during the unlocking process, which not only enhances the service life, but also can enable the unlocking mechanism to unlock the locking member in place when unlocking, so as to avoid the unlocking failure due to the movement of the locking link not being in place.

Preferably, the top end of the unlocking mechanism is rounded and smooth in the shape, or the top end of the unlocking mechanism is provided with a rolling member.

In this solution, by abutting the rounded and smooth top end against the locking link, the contact area with the locking link can be reduced, which facilitates the horizontal movement of the top end of the unlocking mechanism relative to the locking link. Or, by arranging the rolling member at the top end of the unlocking mechanism, it can form a rolling connection with the locking link, thus reducing the resistance of the relative movement between the top end of the unlocking mechanism and the locking link, which facilitates the relative movement.

Preferably, the bottom of the unlocking mechanism is provided with an input end plate, and the extension direction of the input end plate is consistent with the extension direction of the unlocking surface of the locking mechanism.

In this solution, the input end plate is provided at the bottom of the unlocking mechanism, which can increase the contact range between the external driving device and the unlocking mechanism; and the extension direction of the input end plate is consistent with the extension direction of the unlocking surface, so that when the unlocking mechanism unlocks the locking link, the external driving device can also form reliable contact with the unlocking mechanism on the same aspect, preventing the external driving device from moving and causing contact dislocation with the unlocking mechanism.

Preferably, the battery pack comprises an accommodating cavity which penetrates through the battery pack in the vertical direction and is used for placing the unlocking mechanism, wherein the accommodating cavity is communicated with the outlet of the battery pack.

In this solution, by arranging the accommodating cavity in the battery pack, space can be left for the mounting of the unlocking mechanism, and the unlocking mechanism can also be integrated into the battery pack, making the battery pack compact in structure.

Preferably, the unlocking mechanism comprises an unlocking rod and a mounting member, the unlocking rod is mounted on the battery pack through the mounting member, and the unlocking rod is elastically connected with the mounting member.

In this solution, by arranging the unlocking rod in the battery pack in an elastic connection, the impact force can be buffered, and it is also convenient for the unlocking rod to return to its original position after the unlocking is completed.

Preferably, the unlocking mechanism further comprises a first elastic portion, the first elastic portion is sleeved on the unlocking rod, the bottom end of the first elastic portion abuts against the unlocking rod, and the other end of the first elastic portion abuts against the mounting member, and the first elastic portion is used to reset the unlocking rod relative to the battery pack.

In this solution, the elastic connection of the unlocking rod relative to the mounting member is achieved by arranging elastic members, and the structure is simple and reliable. With this structural arrangement, the structure of the unlocking rod is relatively simple.

Preferably, wherein the unlocking rod comprises a first unlocking rod and a second unlocking rod, the first elastic portion is sleeved on the first unlocking rod, and the unlocking mechanism further comprises a second elastic portion, the second unlocking rod is elastically connected with the first unlocking rod through the second elastic portion, and the second elastic portion is arranged at intervals from the first elastic portion, and the top end of the first unlocking rod can extend from the outlet of the battery pack and abut against the locking mechanism to unlock.

In this solution, the elastic connection of the unlocking rod relative to the mounting member is achieved by arranging elastic members, and the structure is simple and reliable. Meanwhile, the first unlocking rod and the second unlocking rod of the unlocking rod are also connected by the elastic part, which is convenient for the first unlocking rod to jack and push away the unlocking rod when the second elastic portion is in the compressed state, and the impact force between the first unlocking rod and the second unlocking rod is buffered by the second elastic portion, thus avoiding the hard impact on the locking mechanism, after the unlocking rod is driven by the battery swapping trolley to jack up in place, under the action of the second elastic portion, the parts are prevented from being jacked and damaged by the further jacking of the unlocking rod.

Preferably, the top of the mounting member is provided with a guide structure, and the top end of the unlocking rod passes through the guide structure and at least partially protrudes from the upper end of the guide structure, and the guide structure is used for positioning with the outlet of the battery pack and restricting the freedom of movement of the unlocking rod in the horizontal direction.

In this solution, by arranging the guide structure to mount and position the outlet on the battery pack, be able to restrict the freedom of movement of the unlocking rod in the horizontal direction, so that the unlocking failure caused by the position deviation of jacking and lifting for the unlocking rod relative to the locking structure on the vehicle body can be avoided, and avoiding collision with the outlet once the direction of movement of the unlocking rod has deviated, thus protecting the unlocking rod and the outlet.

Preferably, the locking member in the battery pack is a locking shaft, both ends of the locking shaft are fixed to the battery pack, and the locking base is provided with a locked groove, the locked groove penetrates through the locking base along the thickness direction of the locking base, and the locked groove is used for the lock shaft to be inserted and locked.

In this solution, both ends of the locking shaft are fixed on the battery pack, and the locked groove penetrates through the locking base along the thickness direction of the locking base; when the locking shaft is hooked to the locked groove, both ends of the locking shaft can be stressed, improving the load-bearing effect of the locking shaft on the battery pack, making the connection between the battery pack and the locking mechanism stronger and more stable.

Preferably, wherein the locked groove comprises an opening groove extending in the vertical direction and a locking groove extending in the horizontal direction, the opening groove extends upward from the bottom of the locking base, and the top of the opening groove is communicated with the locking groove.

In this solution, through the opening groove and the locking groove communicated with it, the locking shaft can enter the locking groove from the opening groove and finally be locked in the locking groove, this locking step is simple and can improve the locking efficiency and success rate.

Preferably, wherein the locking mechanism is a rotary type locking mechanism, and the locking member is rotationally cooperated with and connected to the locking mechanism.

Preferably, the locking member comprises at least one of a threaded member, a bulking bead, a T-lock and a hook, and the unlocking mechanism is arranged to drive the locking member to rotate.

Preferably, wherein the external driving force is applied by a battery swapping device equipped with an unlocking driving mechanism, and the unlocking driving mechanism acts on the unlocking mechanism and drives the unlocking mechanism to move up and down and/or rotate.

In this solution, arranging the unlocking mechanism in the battery pack can shorten the unlocking stroke, thereby improving the reliability of unlocking, and can provide unlocking driving force for the unlocking mechanism through the external battery swapping device, thus simplifying the structure of the battery pack, the structural complexity of the external drive mechanism can also be simplified.

The positive and progressive effect of the present invention is that: the unlocking mechanism is arranged in the battery pack and is configured to unlock the locking mechanism under the external driving force, compared with a method whereby a locking mechanism is directly unlocked by means of an external driving mechanism, an unlocking distance stroke can be shortened, so that not only can the unlocking efficiency be increased, but the alignment precision of the unlocking mechanism on the locking mechanism during unlocking can also be improved, thereby enhancing the unlocking reliability. Moreover, the unlocking mechanism is arranged on the battery pack, so that the occupied space of an external driving mechanism can be reduced, and the overall height of the external driving mechanism is shortened, thereby simplifying the structural complexity of the external driving mechanism.

### BRIEF DESCRIPTION OF THE DRAWINGS

FIG. 1 is a schematic structural diagram of an electric vehicle provided in Embodiment 1 of the present invention, in which the locking member on the battery pack and the locking mechanism on the electric vehicle are locked with each other.
FIG. 2 is a schematic structural diagram of the battery pack and the locking mechanism provided in Embodiment 1 of the present invention when they are locked with each other.
FIG. 3 is a schematic cross-sectional view at the locking position of the locking member of the battery pack and the locking mechanism in FIG. 2.
FIG. 4 is a schematic structural diagram of the locking member provided in Embodiment 1 of the present invention.
FIG. 5 is a schematic cross-sectional view of the locking mechanism provided in Embodiment 1 of the present invention, in which the locking tongue of the locking mechanism is jacked up and the locking groove is opened.
FIG. 6a is a partial structural state diagram when the top end of the unlocking mechanism contacts the locking mechanism and is about to jack up the locking link of the locking mechanism.
FIG. 6b is a partial structural state diagram when the unlocking mechanism jacks up the locking link and opens the locking groove.
FIG. 7 is a schematic diagram of another unlocking surface provided by Embodiment 1 of the present invention.
FIG. 8 is a schematic diagram of another unlocking surface provided by Embodiment 1 of the present invention.
FIG. 9 is a schematic structural diagram of the locking mechanism provided in Embodiment 1 of the present invention.
FIG. 10 is a schematic cross-sectional view of the unlocking mechanism in FIG. 9.
FIG. 11 is a schematic diagram of some components of the locking mechanism and locking member after they are unlocked provided in Embodiment 2 of the present invention.
FIG. 12 is a schematic structural diagram of the locking mechanism provided in Embodiment 3 of the present invention.
FIG. 13 is a schematic cross-sectional view of the unlocking mechanism in FIG. 12.
FIG. 14 is a schematic structural diagram of the locking mechanism provided in Embodiment 4 of the present invention.
FIG. 15 is a schematic cross-sectional view of the unlocking mechanism in FIG. 14.
FIG. 16 is a schematic structural diagram of the locking mechanism and the locking member provided in Embodiment 5 of the present invention.
FIG. 17 is a schematic structural diagram of the locking member in Figure 16.
FIG. 18 is a schematic structural diagram of another locking mechanism provided in Embodiment 5 of the present invention.
FIG. 19 is a schematic structural diagram of another locking member provided in Embodiment 5 of the present invention.
FIG. 20 is a schematic structural diagram of another locking mechanism and locking member provided in Embodiment 5 of the present invention, at the moment, the locking mechanism and the locking member are locked together.
FIG. 21 is a schematic structural diagram of another locking mechanism and locking member provided in Embodiment 5 of the present invention, at the moment, the locking mechanism and the locking member are locked together.

### Description of the reference numerals in the drawings

Electric vehicle 1; vehicle beam 11; battery pack 10; outlet 110; accommodating cavity 120; unlocking mechanism 20; rounded and smooth in the shape 210; abutting portion 211; rolling member 220; bottom seat 221; ball 222; input end plate 230; unlocking rod 241; mounting member 242; first elastic portion 243; first unlocking rod 251; second unlocking rod 252; second elastic portion 253; guide structure 260; locking member 30; locking mechanism 40; locking base 410; locked groove 411; opening groove 412; locking groove 413; locking tongue 420; locking link 430; reset spring 431; unlocking surface 440; recessed portion 450; bottom surface 451; side surface 452; channel 701; base 702; first locking body 703; second locking body 704; locking seat 801; first opening 802; hooking portion 803; first threaded portion 804; hooking rod 903; second threaded portion 904; second opening 905; locking body 906; installation shell 907.

### DETAILED DESCRIPTION OF THE PREFERRED EMBODIMENT

A number of preferred embodiments are listed below, and the invention will be explained more clearly and completely with the attached drawings.

### Embodiment 1

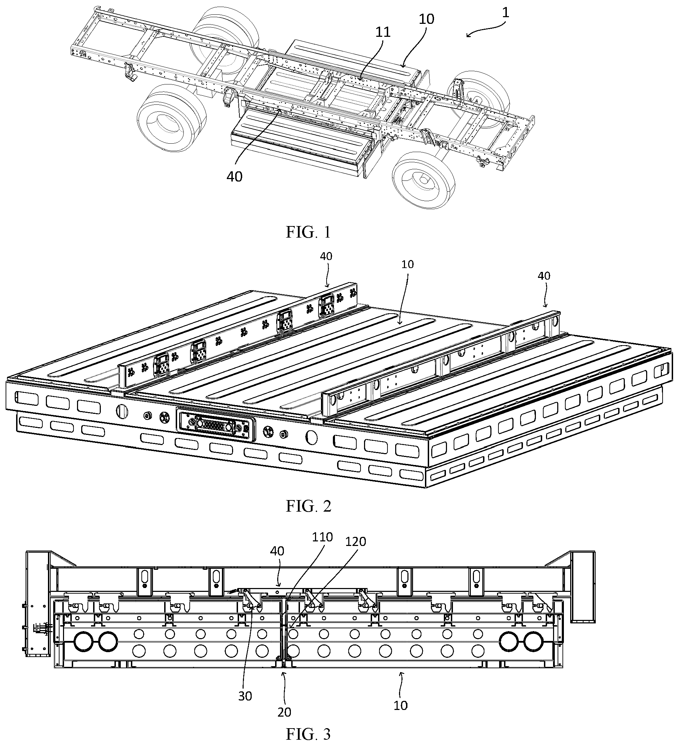

An embodiment of the present invention provides an electric vehicle 1, the electric vehicle 1 is a commercial vehicle such as a heavy truck or a light truck. As shown in FIG. 1, the electric vehicle 1 comprising a battery pack 10 and a locking mechanism 40, wherein the locking mechanism 40 is mounted on the electric vehicle 1 and is configured to lock the battery pack 10; wherein an unlocking mechanism 20 is provided in the battery pack 10, and the unlocking mechanism 20 is configured to unlock the locking mechanism 40 under an external driving force.

As shown in FIG. 1, the battery pack 10 is usually arranged at the bottom of the electric vehicle 1 to facilitate the locking and unlocking operations for the battery pack 10. Accordingly, the locking mechanism 40 may also be located at the bottom of the electric vehicle 1, further, the locking mechanism 40 may be mounted to the bottom of the electric vehicle 1 by providing a mounting seat such as a quick swapping bracket, for example, as shown in FIG. 1, which may be mounted on a vehicle beam 11 of the electric vehicle 1. It is also possible to use the vehicle beam 11 of the electric vehicle 1 as the mounting base and mount the locking mechanism 40 directly on the vehicle beam 11.

As shown in FIGS. 1, 2, and 3, typically, the battery pack 10 is a component with a certain thickness, and the unlocking mechanism 20 can be arranged in the battery pack 10 along the thickness direction of the battery pack 10, and the unlocking mechanism 20 is configured to unlock the locking mechanism 40 under the external driving force, compared with a method whereby the locking mechanism 40 is unlocked by means of an external driving mechanism, an unlocking distance stroke can be shortened, so that not only can the unlocking efficiency be increased, but the alignment precision of the unlocking mechanism on the locking mechanism during unlocking can also be improved, thereby enhancing the unlocking reliability. Meanwhile, the unlocking mechanism 20 is arranged on the battery pack 10, so that the occupied space of an external driving mechanism can be reduced, and the overall height of the external driving mechanism is shortened, and also simplifying the structural complexity of the external driving mechanism. In specific implementation, as shown in FIG. 3, the unlocking mechanism 20 can be arranged in the battery pack 10 and extend in the battery pack 10 along the ejection direction during the unlocking process, specifically, it can extend along the vertical direction, that is, it extends along the thickness direction of the battery pack 10.

As shown in FIG. 3, the battery pack 10 is provided with a locking member 30, and the locking member 30 and the locking mechanism 40 cooperate to lock and unlock the battery pack 10.

FIG. 1 illustrates one embodiment when the locking member 30 on the battery pack 10 and the locking mechanism 40 on the electric vehicle 1 are locked with each other. As shown in FIG. 3, the unlocking mechanism 20 may be located below the locking mechanism 40 and opposite to the locking mechanism 40. In addition, one or multiple unlocking mechanism 20 may be provided according to the specific structural form of the locking mechanism 40, the multiple unlocking mechanisms 20 can apply unlocking action forces to the multiple locking mechanisms 40 respectively, thereby realizing the effective unlocking of the battery pack 10, so that the battery pack 10 is able to be locked on the electric vehicle 1 or to be unlocked and removed from the electric vehicle 1.

The top end of the unlocking mechanism 20 can extend from an outlet 10 of the battery pack 10 and abut against the locking mechanism 40 for unlocking. This unlocking movement method is relatively simple and can improve unlocking reliability.

As shown in FIG. 3, the surface of the battery pack 10 facing the locking mechanism 40 can be provided with the outlet 110, and the top end of the unlocking mechanism 20 can extend from the outlet 110 to unlock the locking mechanism 40, or retract from the outlet 110 to the initial state.

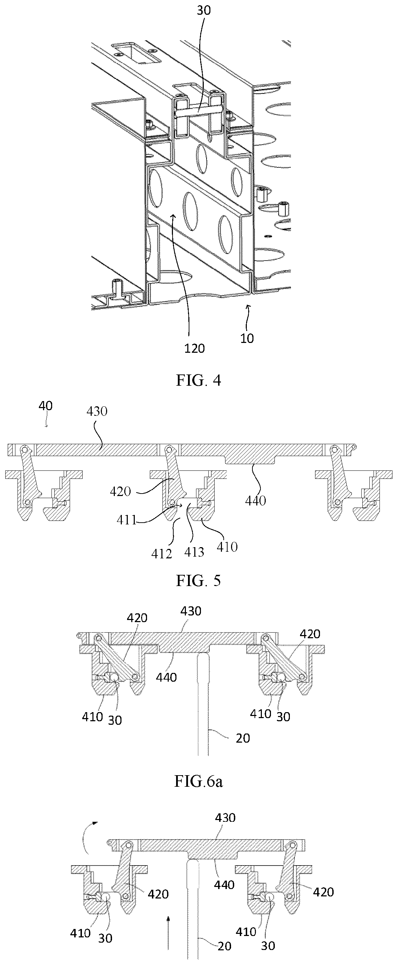

As shown in FIGs. 3 and 5, the locking mechanism 40 comprises a plurality of locking bases 410, at least part of the locking bases 410 are provided with locking tongues 420, and the locking tongue 420 can be rotationally mounted in the locking base 410, the top end of the unlocking mechanism 20 can extend from the outlet 110 of the battery pack 10 to unlock the lock tongue 420. Thus, the battery pack 10 can be locked through the locking tongue 420 mounted in the locking base 410; and the locking tongue 420 is rotatably mounted in the locking base 410, and the unlocking mechanism 20 can push the locking tongue 420 to rotate, thereby unlocking the battery pack 10.

As shown in FIG. 3, the locking member 30 on the battery pack 10 can be locked in the locking base 410 by the locking tongue 420, at which point the battery pack 10 is connected to the locking mechanism 40 on the electric vehicle 1 and can supply power to the electric vehicle 1. The top end of the unlocking mechanism 20 can move out of the outlet 110 and push the locking tongue 420 to rotate to unlock the battery pack 10.

As shown in FIGs. 3 and 5, the locking mechanism 40 further comprises a locking link 430, the locking link 430 is movably connected with the locking base 410 through the locking tongue 420, and the top end of the unlocking mechanism 20 can extend from the outlet 110 of the battery pack 10 and abut against the locking link 430 to drive the locking tongue 420 to unlock.

In specific implementation, as shown in FIGS. 3 and 5, the locking tongue 420 is usually arranged in the locking base 410 and rotates relative to the locking base 410, by providing the locking link 430, the locking link 430 can be used to provide a position bearing force for unlocking, thereby driving the locking tongue 420 to rotate, which facilitates the unlocking of the unlocking mechanism 20 and makes the range of action of the unlocking mechanism 20 larger; in addition, multiple locking tongues 420 can be connected through the locking link 430, thereby driving multiple locking tongues 420 synchronized actions to improve unlocking efficiency.

As shown in FIGs. 3 and 5, one side of the locking link 430 facing the locking base 410 possesses an unlocking surface 440, and the top end of the unlocking mechanism 20 abuts against and moves on the unlocking surface 440, and the unlocking surface 440 extends along the length direction of the locking link 430, so that the unlocking mechanism 20 can move on the unlocking surface 440 without getting stuck at a certain position on the unlocking surface 440, which greatly improves the unlocking stability of the locking mechanism.

The unlocking mechanism 20 abuts against the unlocking surface 440 of the locking link 430, so that the top end of the unlocking mechanism 20 can act on the surface, making the unlocking process more reliable. Furthermore, the unlocking surface 440 extends along the length direction of the locking link 430, during the unlocking process, when the unlocking mechanism 20 moves along the length direction of the locking link 430 to make the locking member 30 of the battery pack 10 move relative to the locking base 410, the top end of the unlocking mechanism 20 can always jack and abut against the locking link 430 and maintain the vertical position of the locking link 430, so that the locking tongue 420 remains open and avoid unlocking errors.

Specifically, when the unlocking mechanism 20 unlocks the battery pack 10 in the locked state shown in FIG. 3, during the unlocking process, the top end of the unlocking mechanism 20 first protrudes from the outlet 110 of the battery pack 10 under the action of the external driving device, and continues to move upward to contact with the locking mechanism 40, specifically, as shown in FIG. 6a (omitting part of the locking base and the locking link), it can contact with the locking link 430 of the locking mechanism 40 or one side of the unlocking surface 440 of other unlocking parts, thus jacking up the unlocking part of the locking mechanism 40, during the jacking up of the locking link 430, the top end of the unlocking mechanism 20 slides along the unlocking surface 440, as shown in FIG. 6b (omitting part of the locking base and the locking link), and the unlocking mechanism 20 slides from one side of the unlocking surface 440 to the other side of the unlocking surface 440. At the moment, the locking member 30 of the battery pack 10 is still in the locking base 410 of the locking mechanism 40, specifically, it can be in the locking groove 413 of the locking base 410. Then, under the action of the external driving device, the battery pack 10 will move in the horizontal direction, during the horizontal movement, since the unlocking surface 440 extends along the length direction of the locking link 430, the top end of the unlocking mechanism 20 can also move along the length direction of the locking link 430 so that the locking mechanism 40 can be in an unlocked state. During the horizontal movement of the unlocking mechanism 20, it can keep the locking link 430 at one height position to prevent the locking link 430 from moving up and down, resulting in unlocking failure.

In specific implementation, as shown in FIG. 5, the unlocking surface 440 can be the surface of the locking link 430 facing the locking base 410, this surface is a horizontal plane, and the unlocking surface is a horizontal plane, which has greater fault tolerance, and on the condition that there is alignment deviation, or a twist angle for the unlocking device, it can always remain within the unlocking surface. In other embodiments, the unlocking surface 440 may also have other structural forms.

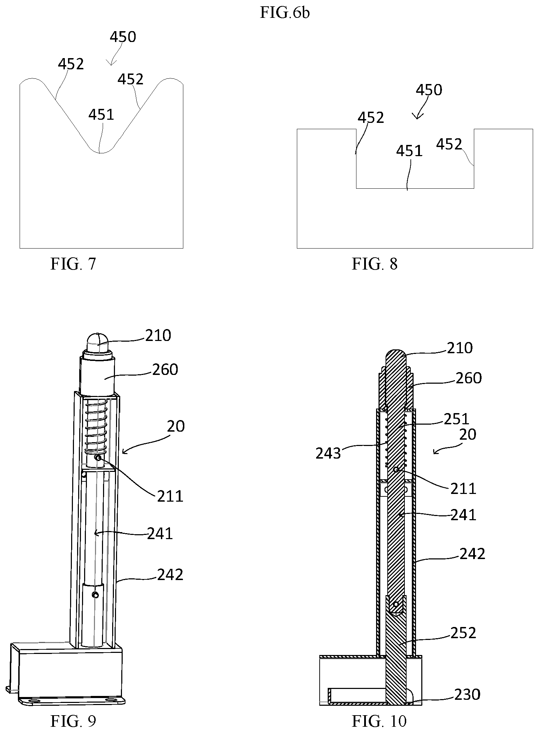

In other embodiments, as shown in FIGs. 7 and 8, the lower surface of the locking link 430 possesses a recessed portion 450 extending away from the locking base 410, that is, the recessed portion 450 is recessed toward the locking link 430 (that is, recessed upward), and the unlocking surface 440 is at least one surface of the inner surfaces of the recessed portion 450.

The lower surface of the locking link 430 possesses the recessed portion 450, and the top end of the unlocking mechanism 20 can be accommodated by the recessed portion 450, thereby limiting the movement of the unlocking mechanism 20, so that the unlocking mechanism 20 can move in a straight line to avoid misalignment of movement and resulting in unlocking failure. The top end of the unlocking mechanism 20 can extend into the bottom surface 451 of the recessed portion 450, so that the top end of the unlocking mechanism 20 can contact with the bottom surface 451 and at least one side surface 452 of the inner surfaces of the recessed portion 450; alternatively, the top end of the unlocking mechanism 20 extends into inside the recessed portion 450, but does not contact with the bottom surface 451, so that the top end of the unlocking mechanism 20 can contact with the two side surfaces 452 of the inner surface of the recessed portion 450. Wherein, as shown in FIG. 7, the recessed portion 450 can be in the form with a circular arc transition, and its width can gradually increase from the opening to the bottom surface 451, thereby it functions as providing certain guiding when the unlocking mechanism 20 enters the recessed portion 450, and possesses appropriate fault tolerance, which allows the unlocking device to move along the length direction of the locking link within the unlocking surface and facilitates the stay of the unlocking device. The recessed portion 450 can also have other structural forms, such as triangle or prism, etc., and can also form an optimal unlocking line with the unlocking device and possess appropriate fault tolerance, so that the unlocking device moves along the length direction of the locking link in the unlocking surface, and it is easy for the unlocking device to stay.

As shown in FIG. 8, the recessed portion 450 can also be in a rectangular structural form, so that both side walls of the recessed portion 450 can more reliably restrict the top end of the unlocking mechanism 20.

Preferably, the inner surface of the recessed portion 450 extends in the horizontal direction. Thereby, the unlocking mechanism 20 can jack and abut against the locking link 430 in the horizontal direction.

As a preferred embodiment, in an initial state, the top end of the unlocking mechanism 20 extends from the outlet 110 of the battery pack 10 and is spaced vertically from the unlocking surface 440.

The initial state refers to the state when the battery pack 10 is locked with the locking mechanism 40 and the unlocking mechanism 20 does not conduct unlocking operation to the locking mechanism 40, that is, the state as shown in FIG. 3. In the initial state, the top end of the unlocking mechanism 20 can extend from the outlet 110 of the battery pack 10, thereby shortening the distance between the top end and the unlocking surface 440, reducing the moving distance of the unlocking mechanism 20, improving unlocking efficiency, and improving unlocking reliability.

As a preferred embodiment, a buffer structure (not shown in the figure) is further provided at the unlocking surface 440, and the top end of the unlocking mechanism 20 abuts against the buffer structure.

In the specific implementation, the buffer structure is provided at the unlocking surface 440, when the top end of the unlocking mechanism 20 acts on the unlocking surface 440, it can be buffered by the buffer structure to avoid wear of the unlocking surface 440 due to rigid contact during the unlocking process, which not only enhances the usage life, but also can enable the unlocking mechanism 20 to unlock the locking member 30 in place when unlocking, so as to avoid the unlocking failure due to the movement of the locking link 430 not being in place.

The top end of the unlocking mechanism 20 matches the unlocking surface 440 of the locking mechanism 40 and can act on the unlocking surface 440 of the locking mechanism 40. In specific implementations, the unlocking mechanism 20 may also adopt various structural forms, and some feasible implementations will be provided below in combination with the accompanying drawings.

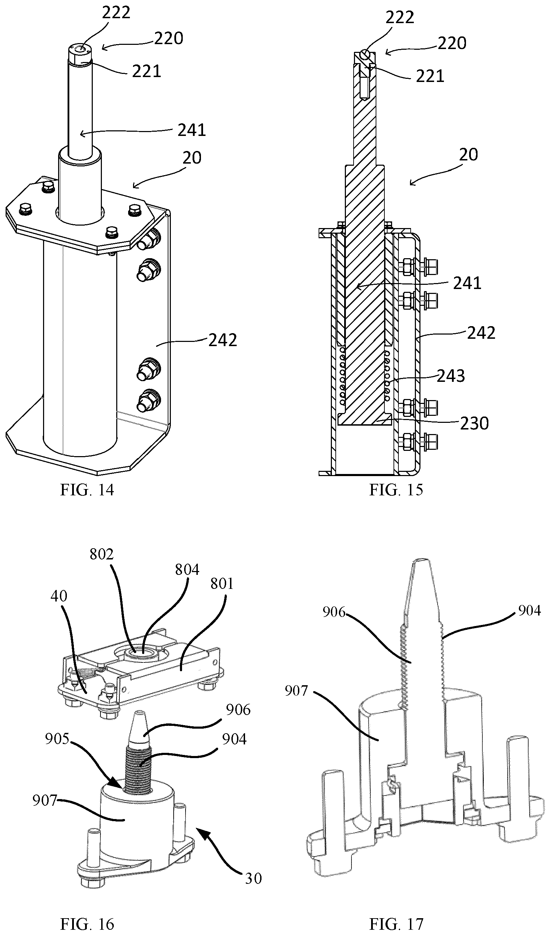

As a preferred embodiment, as shown in FIGs. 9 and 10, and FIGs. 12 and 13, the top end of the unlocking mechanism 20 is rounded and smooth in the shape, or the top end of the unlocking mechanism 20 is provided with a rolling member 220, as shown in FIGs. 14 and 15.

As shown in FIGs. 9 and 10, and FIGs. 12 and 13, by abutting the top end rounded and smooth in the shape 210 against the locking link 430, the contact area with the locking link 430 can be reduced, which facilitates the horizontal movement of the top end of the unlocking mechanism 20 relative to the locking link 430. Or, as shown in FIGs. 14 and 15, by arranging the rolling member 220 at the top end of the unlocking mechanism 20, it can form a rolling connection with the locking link 430, thus reducing the resistance of the relative movement between the top end of the unlocking mechanism 20 and the locking link 430, which facilitates the relative movement.

Wherein the shape of rounded and smooth may be in the form of a spherical or elliptical spherical structure. The rolling member 220 may include a bottom seat 221 and a ball 222, and the ball 222 is housed and restricted within the bottom seat 221 and capable of rolling within the bottom seat 221.

In this embodiment, as shown in FIGs. 3 and 10, the bottom of the unlocking mechanism 20 is provided with an input end plate 230, and the extension direction of the input end plate 230 is consistent with the extension direction of the unlocking surface 440 of the unlocking mechanism 20. The input end plate 230 is provided at the bottom of the unlocking mechanism 20, which can increase the contact range between the external driving device and the unlocking mechanism 200; and as shown in FIG. 3, the extension direction of the input end plate 230 is consistent with the extension direction of the unlocking surface 440, so that when the unlocking mechanism 20 unlocks the locking link 430, the external driving device can also form reliable contact with the unlocking mechanism 20 on the same aspect, preventing the external driving device from moving and resulting in contact dislocation with the unlocking mechanism 20.

As shown in FIG. 3, the battery pack 10 possesses an accommodating cavity 120 which penetrates the battery pack 10 in the vertical direction and is used for placing the unlocking mechanism 20; wherein the accommodating cavity 120 is communicated with the outlet 110 of the battery pack 10. By arranging the accommodating cavity 120 in the battery pack 10, space can be left for the arrangement of the unlocking mechanism 20, and the unlocking mechanism 20 can also be integrated into the battery pack 10, making the battery pack 10 compact in structure.

As shown in FIGs. 9-10, the unlocking mechanism 20 comprises an unlocking rod 241 and a mounting member 242, the unlocking rod 241 is mounted on the battery pack 10 through the mounting member 242, and the unlocking rod 241 is elastically connected with the mounting member 242. By arranging the unlocking rod 241 in the battery pack 10 in an elastic connection, the impact force can be buffered, and it is also convenient for the unlocking rod 241 to return to its original position after the unlocking is completed.

As shown in FIGs. 9 and 10, the unlocking mechanism 20 further comprises a first elastic portion 243 sleeved on the unlocking rod 241, the bottom end of the first elastic portion 243 abuts against the unlocking rod 241, and the other end of the first elastic portion 243 abuts against the mounting member 242, and the first elastic portion 243 being used for resetting the unlocking rod 241 relative to the battery pack 10.

FIG. 9 shows a schematic diagram when the first elastic portion 243 is in an initial state. As shown in FIG. 10, the unlocking rod 241 is an integrally movable rod-shaped structure, specifically, it is composed of a first unlocking rod 251 and a second unlocking rod 252, the first unlocking rod 251 and the second unlocking rod 252 are fixedly connected, when being jacked and lifted by the external driving device, the unlocking rod 241 moves as a whole. The first unlocking rod 251 is also provided with an abutting portion 211, and the upper surface of the abutting portion 211 can be used as a surface abutting against the first elastic portion 243.

As a preferred embodiment, as shown in FIGs. 9 and 10, wherein the top of the mounting member is provided with a guide structure 260, and the top end of the unlocking rod 241 penetrates through the guide structure 260 and at least partially protrudes from the upper end of the guide structure 260, and the guide structure 241 is used for positioning with the outlet 110 of the battery pack 10 and restricting the freedom of movement of the unlocking rod 241 in the horizontal direction.

By arranging the guide structure 260 to restrict the freedom of movement of the unlocking rod 241 in the horizontal direction, so that the unlocking failure caused by the position deviation of jacking and lifting for the unlocking rod 241 relative to the locking structure 260 on the vehicle body can be avoided, and avoiding collision with the outlet 110 once the direction of movement of the unlocking rod 241 has deviated, thus protecting the unlocking rod 241 and the outlet 110. Specifically, as shown in FIG. 10, the guide structure 260 can be a sleeve.

In this embodiment, as shown in FIGs. 3 and 4, the locking member 30 within the battery pack 10 is a locking shaft, the locking shaft is fixed to the battery pack 10 at both ends, the locking base 410 is provided with a locked groove 411, the locked groove 411 penetrates through the locking base 410 along the thickness direction of the locking base 410, and the locked groove 411 is used for being penetrated and inserted by the locking shaft.

Both ends of the locking shaft are fixed on the battery pack 10, and the locked groove 411 penetrates through the locking base 410 along the thickness direction of the locking base 410; when the locking shaft is hooked to the locked groove 411, both ends of the locking shaft can be applied force, improving the load-bearing effect of the locking shaft on the battery pack 10, making the connection between the battery pack 10 and the locking mechanism 40 securer and more stable.

In this embodiment, as shown in FIG. 5, the locked groove 411 comprises an opening groove 412 extending in the vertical direction and a locked groove 411 extending in the horizontal direction, the opening groove 412 extends upward from the bottom of the locking base 410, and the top of the opening groove 412 is communicated with the locking groove 413. Through the opening groove 412 and the locking groove 413 communicated with it, the locking shaft can enter the locking groove 413 from the opening groove 412 and finally be locked in the locking groove 413, this locking step is simple and can improve the locking efficiency and success rate.

In this embodiment, the external driving force is applied by a battery swapping device equipped with an unlocking driving mechanism, and the unlocking driving mechanism acts on the unlocking mechanism 20 and drives the unlocking mechanism 20 to move up and down to unlock the locking mechanism 40. The unlocking driving force can be provided for the unlocking mechanism 20 through an external battery swapping device, thereby simplifying the structure of the battery pack 10.

### Embodiment 2

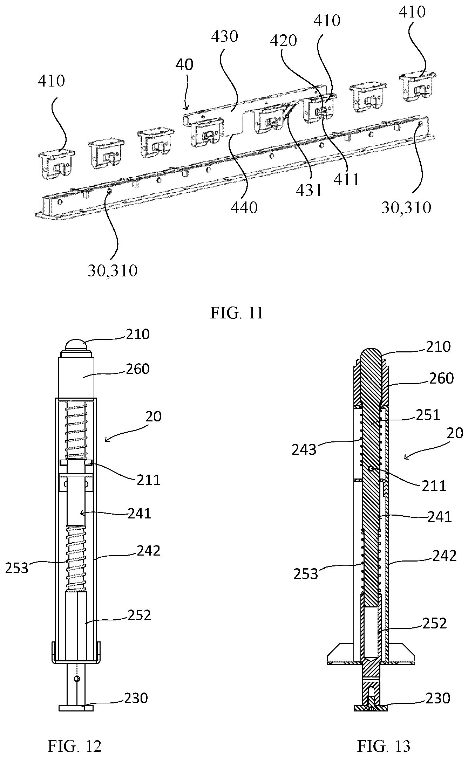

As shown in FIG. 11, the present embodiment provides a schematic diagram of another locking mechanism, the difference between the locking mechanism in FIG. 11 and the locking mechanism in the above-described Embodiment 1 is that the portion of the locking link 430 at which the unlocking surface 440 is provided in the locking mechanism 40 in the present embodiment extends further downwardly, which is closer to the top end of the unlocking mechanism compared to the locking mechanism 40 in the Embodiment 1, which is capable of further shortening the distance between the top end of the unlocking mechanism 20 and the unlocking surface 440, and improving the efficiency and reliability of unlocking.

In addition, there is a reset spring 431 between the locking link 430 and the locking base 410 in this embodiment, when the top of the unlocking mechanism 20 is moved down to the initial position, the reset spring 431 can apply an action force on the locking link 430, so that the locking link 430 can be reset from the unlocking position to the locking position.

### Embodiment 3

As shown in FIGs. 12 and 13, this embodiment provides another unlocking mechanism, and the difference between this embodiment and Embodiment 1 above is that the specific structural form of the unlocking mechanism differs; the rest of the structure of the electric vehicle is consistent with that in above Embodiment 1 and Embodiment 2. Moreover, the unlocking mechanism in this embodiment may also be combined in any combination with the embodiments in the above-described Embodiment 1 and Embodiment 2.

FIG. 12 illustrates a schematic diagram of the first elastic portion 243 when it is in an initial state; as shown in FIGs. 12 and 13, an unlocking rod 241 of the unlocking mechanism 20 is a split structure with two stages of elastic compression, and an upper portion of the unlocking rod 241 is further provided with an abutting portion 211, an upper surface of which may serve as a surface for abutting against the first elastic portion 243.

As shown in FIG. 11, the unlocking mechanism 20 comprises an unlocking rod 241 and a mounting member 242, the unlocking rod 241 is mounted to the battery pack 10 via the mounting member 242, the unlocking rod 241 comprises a first unlocking rod 251 and a second unlocking rod 252, the abutting portion 211 is provided on the first unlocking rod 251, the first elastic portion 243 is sleeved on the first unlocking rod 251, the bottom end of the first elastic portion 243 abuts against the abutting portion 211 and the other end of the first elastic portion 243 abuts against the mounting member 242, and the first elastic portion 243 is used for reset of the unlocking rod 241 relative to the battery pack 10. The unlocking mechanism 20 further comprises a second elastic portion 253, the second unlocking rod 252 is elastically connected with the first unlocking rod 251 via the second elastic portion 253, and the second elastic portion 253 is arranged at intervals from the first elastic portion 243, and the top end of first unlocking rod 251 can extend from the outlet 110 of the battery pack 10 and abut against the locking mechanism 40 for unlocking.

The elastic connection of the unlocking rod 241 relative to the mounting member 242 is achieved by arranging elastic members, and the structure is simple and reliable. Meanwhile, the first unlocking rod 251 and the second unlocking rod 252 of the unlocking rod 241 are also connected depending on the second elastic portion 253, the second elastic portion 253 can be used as an energy storage component to store the force, so it is convenient for the first unlocking rod 251 to jack and push away the unlocking link 430 when the second elastic portion 253 is at compressed state, and the impact force between the first unlocking rod 251 and the second unlocking rod 252 is buffered by the second elastic portion 253, thus avoiding the hard impact on the locking mechanism 40, after the unlocking rod 241 is driven by the battery swapping trolley to jack up in place, the parts are prevented from being damaged by the further jacking of the unlocking rod 241 via the contraction of the unlocking rod 241 itself under the action of the second elastic portion 253.

As a preferred embodiment, as shown in FIGs. 12 and 13, the top of the mounting member 242 is provided with a guide structure 260, and the top end of the unlocking rod 241 passes through interior of the guide structure 260 and at least partially protrudes from the upper end of the guide structure 260, and the guide structure 241 is used for positioning with the outlet 110 of the battery pack 10 and restricting the freedom of movement of the unlocking rod 241 in the horizontal direction.

By arranging the guide structure 260 to restrict the freedom of movement of the unlocking rod 241 in the horizontal direction, so that the unlocking failure caused by the position deviation of jacking and lifting for the unlocking rod 241 relative to the locking structure 260 on the vehicle body can be avoided, and avoiding collision with the outlet 110 once the direction of movement of the unlocking rod 241 has deviated, thus protecting the unlocking rod 241 and the outlet 110. Specifically, as shown in FIG. 12, the guide structure 260 can be a sleeve.

### Embodiment 4

As shown in FIGs. 14 and 15, this embodiment provides another unlocking mechanism, and the difference between this embodiment and Embodiments 1 and 3 above is that the specific structural form of the unlocking mechanism differs; the rest of the structure of the electric vehicle is consistent with that in Embodiments 1-3 above. Moreover, the unlocking mechanism in this embodiment may also be combined in any combination with the embodiments in the above-described Embodiments 1-3.

As shown in FIG. 14, the unlocking mechanism 20 comprises an unlocking rod 241 and an mounting member 242, the unlocking rod 241 is mounted to the battery pack 10 via the mounting member 242, and the unlocking mechanism 20 further comprises a first elastic portion 243, the first elastic portion 243 is sleeved on the unlocking rod 241, the bottom end of the first elastic portion 243 abuts against the unlocking rod 241, and the other end of the first elastic portion 243 abuts against a guide cylinder within the mounting member 242, and the first elastic portion 243 is used for resetting of the unlocking rod 241 relative to the battery pack 10.

A schematic diagram is illustrated in FIG. 15 when the first elastic portion 243 is in a compressed state, at the moment, the unlocking rod 241 is jacked up by an external driving device (not shown in the figure).

More specifically, as shown in FIG. 15, the unlocking rod 241 of the unlocking mechanism 20 is an integrated structure, and the upper surface of the input end plate 230 at the lower end thereof may serve as a surface abutting against the first elastic portion 243.

In a specific implementation, for the unlocking mechanism 20 with one-stage elastic compression shown in FIG. 14, it may also be possible to configure a component for elastic compression at an output end of the external driving device corresponding to the unlocking mechanism 20, so that the external driving device and the unlocking mechanism 20 can together form a second-stage elastic compression to avoid the parts from being jacked and damaged.

As shown in FIGs. 14 and 15, by arranging a rolling member 220 at the top end of the unlocking mechanism 20, it can form a rolling connection with the locking link 430, thus reducing the resistance of the relative movement between the top end of the unlocking mechanism 20 and the locking link 430, which facilitates the relative movement. The rolling member 220 may include a bottom seat 221 and a ball 222, the ball 222 being housed and confined within the bottom seat 221 and capable of rolling within the bottom seat 221.

For the above Embodiments 1-4, a structure in which the top end of the unlocking mechanism 20 is rounded and smooth in the shape 210 is shown in FIGs. 9 and 10, and in FIGs. 12 and 13, which is also applicable in the unlocking mechanism 20 in FIGs. 14 and 15. Accordingly, the structure of the unlocking mechanism 20 illustrated in FIGs. 14 and 15 with the rolling member 220 at the top of the unlocking mechanism 20 may also be applicable in the unlocking mechanism 20 of FIGs. 12 and 13. This specific embodiment should not be limited to the embodiments provided by the embodiments of the present invention. In specific implementation, the guide structure 260 is also applicable in the unlocking mechanism 20 in FIG. 14 and FIG. 15.

### Embodiment 5

In the above embodiments, specific implementations that the lock shaft is locked through the locking base 410 and the locking tongue 420 are provided, during specific implementation, the locking member 30 and the locking mechanism 40 can also have other embodiments, this will be explained further below.

In this embodiment, wherein locking mechanism 40 is a rotary type locking mechanism 40, and the locking member 30 is rotationally cooperated with and connected to the locking mechanism 40.

The locking member 30 comprises at least one of a threaded member, a bulking bead, a T-shaped lock and a hook, and the unlocking mechanism 20 is arranged to drive the locking member 30 to rotate.

Specifically, in the threaded connection mode, as shown in FIGs. 16 and 17, the locking mechanism 40 comprises a locking seat 801, the locking seat 801 has a first opening 802 extending in the vertical direction, a first threaded portion 804 is provided in the first opening 802, and the first threaded portion 804 is an internal thread, the locking member 30 comprises a mounting shell 907 and a locking body 906, the mounting base 907 has a second opening 905 extending in the vertical direction, the locking body 906 is vertically arranged in the second opening 905, the locking body 906 can move in the vertical direction relative to the mounting shell 907, the locking body 906 is provided with a second threaded portion that matches the first threaded portion 804, the second threaded portion 904 can engage with the first threaded portion 804 to realize locking and unlocking of the locking mechanism 40 and the locking member 30.

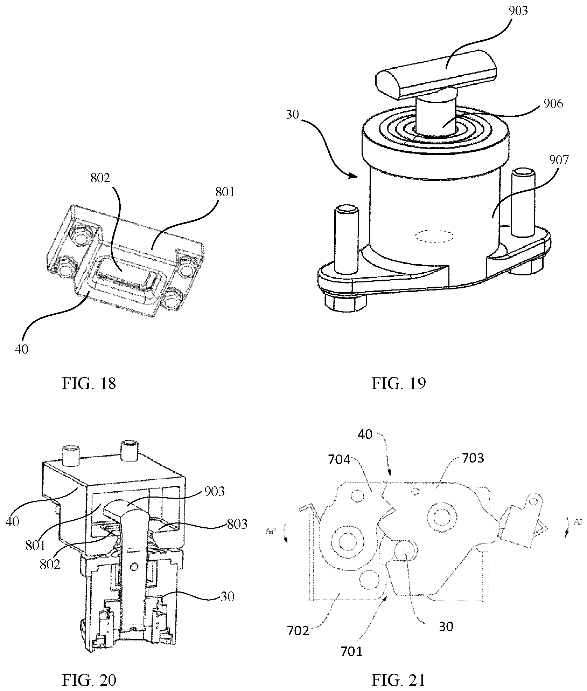

In other specific embodiments, in the rotational engagement mode, as shown in FIGs. 18, 19 and 20, the locking mechanism 40 comprises a locking seat 801, and the locking seat 801 has a first opening 802 extending in the vertical direction, the locking seat 801 is provided with a hooking portion 803, the locking seat 801 is provided with a hooking cavity, the first opening 802 is communicated with the hooking cavity, and the hooking portion 803 is located at the bottom of the hooking cavity, in this embodiment, the first opening 802 is a square hole, and the hooking portions 803 are located on both sides of the first opening 802, the locking member 30 comprises a locking body 906, and the upper end of the locking body 906 is provided with a hooking rod 903 extending in the horizontal direction, the hooking rod 903 is a columnar body and is horizontally arranged on the top of the locking body 906, the hooking rod 903 and the locking body 906 together form a T-shaped structure.

When the hooking rod 903 is in a first position, it can pass through the first opening 802 and enter the hooking cavity of the locking seat 801, when the hooking rod 903 located in the hooking cavity rotates to a second position, it can be hooked on the limiting part 803, so that the locking mechanism 40 and the locking member 30 can be locked and fixed relatively.

In other specific embodiments, in the hook locking mode, as shown in FIG. 21, a base 702 is provided with a channel 701 extending in the direction of gravity, and the channel 701 extends to the lower surface of the base 702 to enable the locking member 30 to enter and exit the channel 701. The locking mechanism 40 is provided on the base 702. Wherein, the locking mechanism 40 is configured to lock the locking member 30 when the locking member 30 moves upward to a predetermined position of the channel 701, and the locking mechanism 40 is configured to unlock the locking member 30, so that the locking member 30 moves downward to be separated from the channel 701 under the gravity of the battery pack 10.

The locking mechanism 40 may include a first locking body 703 and a second locking body 704. The first locking body 703 is rotatably mounted on the base 702. The first locking body 703 is configured to prevent the locking member 30 located at the predetermined position of the channel 701 from moving downward when it is in the locking position, so as to lock the locking member 30. The second locking body 704 is configured to prevent the first locking body 703 from rotating when the first locking body 703 rotates to the locking position, so as to keep the first locking body 703 in the locking position.

More specifically, the first locking body 703 may be a ratchet wheel and the second locking body 704 may be a pawl. The ratchet wheel is configured to be driven by the locking member 30 to rotate in the first direction A1 during the upward movement of the locking member 30. The pawl is configured to engage with the ratchet wheel to prevent the ratchet wheel from rotating when the locking member 30 moves upward to the predetermined position of the channel 701, for example, to prevent the ratchet wheel from rotating in a second direction A2 opposite to the first direction A1, so that the locking member 30 is locked in the channel 701 by the ratchet wheel, and the battery pack 10 is locked.

In this embodiment, the external driving force is applied by a battery swapping device equipped with an unlocking driving mechanism, and the unlocking driving mechanism acts on the unlocking mechanism 20 and drives the unlocking mechanism 20 to rotate to unlock the rotary type locking mechanism 40. The unlocking driving force can be provided for the unlocking mechanism 20 through an external battery swapping device, thereby simplifying the structure of the battery pack 10.

Although specific embodiments of the present invention are described above, it should be understood by those skilled in the field that these are merely illustrative and that a variety of changes or modifications can be made to these embodiments without departing from the principles and substance of the present invention. Therefore, the scope of protection of the invention is limited by the attached claims.

## Claims

1. An electric vehicle, comprising a battery pack and a locking mechanism, wherein the locking mechanism is mounted on the electric vehicle and is configured to lock the battery pack; wherein an unlocking mechanism is provided in the battery pack, and the unlocking mechanism is configured to unlock the locking mechanism under an external driving force.

2. The electric vehicle according to claim 1, wherein the battery pack is provided with a locking member, and the locking member and the locking mechanism cooperate to lock and unlock the battery pack.

3. The electric vehicle according to claim 1 or 2, wherein the top end of the unlocking mechanism can extend from an outlet of the battery pack and abut against the locking mechanism for unlocking.

4. The electric vehicle according to any one of claims 1 to 3, wherein the locking mechanism comprises a plurality of locking bases, at least part of the locking bases are provided with locking tongues, and the locking tongue can be rotationally mounted in the locking base, the top end of the unlocking mechanism can extend from an outlet of the battery pack to unlock the lock tongue.

5. The electric vehicle according to claim 4, wherein the locking mechanism further comprises a locking link, the locking link is movably connected with the locking base through the locking tongue, and the top end of the unlocking mechanism can extend from the outlet of the battery pack and abut against the locking link to drive the locking tongue to unlock.

6. The electric vehicle according to claim 5, wherein the locking link possesses an unlocking surface on one side facing the locking base, the top end of the unlocking mechanism abuts against the unlocking face and moves on the unlocking face, the unlocking face extends along the length direction of the locking link, so that when the unlocking mechanism moves on the unlocking surface, the locking tongue can be driven to unlock and remain unlocked.

7. The electric vehicle according to claim 6, wherein the lower surface of the locking link possesses a protruding portion extending toward the locking base, and the unlocking surface is located at the bottom surface of the protruding portion.

8. The electric vehicle according to claim 6 or 7, wherein the unlocking surface is in the form of a horizontal plane, or the unlocking surface is a concave square, a concave arc, a concave triangle or a concave prism.

9. The electric vehicle according to any one of claims 6 to 8, wherein a buffer structure is further provided on the unlocking surface, and the top end of the unlocking mechanism abuts against with the buffer structure.

10. The electric vehicle according to any one of claims 1-9, wherein the top end of the unlocking mechanism is rounded and smooth in the shape, or the top end of the unlocking mechanism is provided with a rolling member.

11. The electric vehicle according to any one of claims 1 to 10, wherein the bottom of the unlocking mechanism is provided with an input end plate, and the extension direction of the input end plate is consistent with the extension direction of the unlocking surface of the locking mechanism.

12. The electric vehicle according to any one of claims 1 to 11, wherein the battery pack comprises an accommodating cavity which penetrates through the battery pack in the vertical direction and is used for placing the unlocking mechanism;
wherein the accommodating cavity is communicated with the outlet of the battery pack.

13. The electric vehicle according to any one of claims 1 to 12, wherein the unlocking mechanism comprises an unlocking rod and an mounting member, wherein the unlocking rod is mounted on the battery pack through the mounting member, and the unlocking mechanism further comprises a first elastic portion, the first elastic portion is sleeved on the unlocking rod, the bottom end of the first elastic portion abuts against the unlocking rod, and the other end of the first elastic portion abuts against the mounting member, and the first elastic portion is used to reset the unlocking rod relative to the battery pack.

14. The electric vehicle according to claim 13, wherein the unlocking rod comprises a first unlocking rod and a second unlocking rod, the first elastic portion is sleeved on the first unlocking rod, and the unlocking mechanism further comprises a second elastic portion, the second unlocking rod is elastically connected with the first unlocking rod through the second elastic portion, and the second elastic portion is arranged at intervals from the first elastic portion, and the top end of the first unlocking rod can extend from the outlet of the battery pack and abut against the locking mechanism to unlock.

15. The electric vehicle according to claim 13 or 14, wherein the top of the mounting member is provided with a guide structure, and the top end of the unlocking rod passes through the guide structure and at least partially protrudes from the upper end of the guide structure, and the guide structure is used for positioning with the outlet of the battery pack and restricting the freedom of movement of the unlocking rod in the horizontal direction.

16. The electric vehicle according to claim 4, wherein the locking member in the battery pack is a locking shaft, both ends of the locking shaft are fixed to the battery pack, and the locking base is provided with a locked groove, the locked groove penetrates through the locking base along the thickness direction of the locking base, and the locked groove is used for the lock shaft to be inserted and locked.

17. The electric vehicle according to claim 16, wherein the locked groove comprises an opening groove extending in the vertical direction and a locking groove extending in the horizontal direction, the opening groove extends upward from the bottom of the locking base, and the top of the opening groove is communicated with the locking groove.

18. The electric vehicle according to any one of claims 2 to 17, wherein the locking mechanism is a rotary type locking mechanism, and the locking member is rotationally cooperated with and connected to the locking mechanism.

19. The electric vehicle according to claim 18, wherein the locking member comprises at least one of a threaded member, a bulking bead, a T-lock and a hook, and the unlocking mechanism is arranged to drive the locking member to rotate.

20. The electric vehicle according to any one of claims 1 to 19, wherein the external driving force is applied by a battery swapping device equipped with an unlocking driving mechanism, and the unlocking driving mechanism acts on the unlocking mechanism and drives the unlocking mechanism to move up and down and/or rotate.
